# EUROPÄISCHE PATENTSCHRIFT

(11) **EP 3 596 814 B1**
(45) Veröffentlichungstag und Bekanntmachung des Hinweises auf die Patenterteilung: **06.01.2021**
(21) Anmeldenummer: 17807767.3
(22) Anmeldetag: 17.11.2017
(51) Int. Cl.: H02M 1/32, G01K 11/32, G01K 5/62

(54) **UMRICHTERANORDNUNG MIT BRANDMELDEANLAGE**
INVERTER WITH FIRE ALARM
ONDULEUR AVEC ALARME INCENDIE

(30) Priorität: 10.05.2017 DE 102017207898
(43) Veröffentlichungstag der Anmeldung: 22.01.2020
(73) Patentinhaber: Siemens Aktiengesellschaft, 80333 München (DE)
(72) Erfinder: SCHMITT, Daniel, 92353 Postbauer-Heng (DE); ZENKNER, Andreas, 90587 Veitsbronn (DE)
(86) Internationale Anmeldenummer: PCT/EP2017/079544
(87) Internationale Veröffentlichungsnummer: WO 2018/206134

(56) Entgegenhaltungen:
- DE-A1-102014 212 348
- FR-A1- 2 616 905

## Beschreibung

Die Erfindung betrifft eine Umrichteranordnung mit einer Vielzahl elektrisch verbundener Schaltmodule, die jeweils Halbleiterschalter aufweisen, sowie mit einer Brandmeldeanlage zur Brandüberwachung der Umrichteranordnung.

Eine Umrichteranordnung mit elektrisch in Reihe verbundenen Schaltmodulen, die in einer Halbbrückenschaltung bzw. einer Vollbrückenschaltung verbundene Halbleiterschalter umfassen, ist beispielsweise aus der WO 2016/155850 A1 bekannt. Der dort beschriebene Umrichter wird als modularer Mehrstufenumrichter (MMC) bezeichnet. Der MMC zeichnet sich insbesondere durch eine modulare Bauweise aus. Er umfasst Umrichterarme, die sich jeweils zwischen einem Wechselspannungsanschluss und einem von zwei Gleichspannungspolen des MMC erstrecken. Die Umrichterarme des MMC weisen jeweils eine Reihenschaltung zweipoliger Schaltmodule auf, wobei jedes Schaltmodul ein- und abschaltbare Halbleiterschalter sowie einen Energiespeicher, bevorzugt in Form eines Umrichterkondensators, umfasst. Jedes der Schaltmodule ist mittels einer Ansteuereinrichtung einzeln ansteuerbar. Eine an dem Umrichterarm abfallende Spannung ist gleich der Summe von Spannungen, die an den zugehörigen Schaltmodulen abfallen. Mittels des MMC ist eine besonders vorteilhafte, stufenförmige Konverterspannung erzeugbar. Die Schaltmodule sind meist als Halbbrückenschaltungen oder als Vollbrückenschaltungen ausgebildet. Das Schaltmodul in Halbbrückenschaltung weist zwei abschaltbare Halbleiterschalter und den Energiespeicher auf, wobei die Halbleiterschalter so mit dem Energiespeicher verschaltet sind, dass an den Ausgangsklemmen des Schaltmoduls eine an dem Energiespeicher abfallende Energiespeicherspannung oder eine Nullspannung erzeugbar ist. Umrichteranordnungen dieser Art werden üblicherweise zur Stromumwandlung, beispielsweise in der Hochspannungsgleichstromübertragung, als auch zur Blindleistungskompensation bzw. Stabilisierung von Wechselspannungsnetzen eingesetzt. In solchen Fällen ist der Umrichterarm beispielsweise zwischen zwei Wechselspannungsanschlüssen des Umrichters angeordnet.

Zur Brandüberwachung einer solchen Umrichteranordnung ist es darüber hinaus bekannt, eine Brandmeldeanlage vorzusehen. Die Brandmeldeanlage hat die Aufgabe, einen aufgrund eines Fehlers in der Umrichteranordnung aufgetretenen Brand, der für die Funktionsweise der Umrichteranordnung gefährlich sein kann, zu erkennen. In einem solchen Fall meldet die Brandmeldeanlage ein entsprechendes Fehlersignal an eine übergeordnete Stelle, die zur Einleitung einer Gegenmaßnahme geeignet ist. Aufgrund des komplexen Aufbaus der oben genannten Umrichteranordnung ist eine Brandüberwachung meist kostenintensiv.

Aus der DE 10 2014 212348 A1 ist das Problem bekannt, eine Temperaturüberwachung mehrerer Halbleitermodule vorzusehen, ohne für jedes zu überwachende Halbleitermodul einen Temperatursensor einsetzen zu müssen.

Die FR 2 616 905 A1 beschreibt die Verwendung von Lichtfasern zur Temperaturmessung.

Die Aufgabe der Erfindung ist es, eine Umrichteranordnung der obigen Art vorzuschlagen, die über eine kostengünstige und zuverlässige Brandüberwachung verfügt.

Die Aufgabe wird bei einer artgemäßen Umrichteranordnung erfindungsgemäß dadurch gelöst, dass die Brandmeldeanlage wenigstens einen Lichtwellenleiter umfasst, der an mehreren vorbestimmten, voneinander beabstandeten Stellen jeweils ein Blendeelement aufweist, wobei jedes Blendeelement bei einem Temperaturanstieg am Blendeelement eine Lichtintensität eines das Blendeelement passierenden Lichtsignals reduziert.

Der Erfindung liegt die Erkenntnis zugrunde, dass die bei einem potenziellen Brand erzeugte Hitzeentwicklung zu einer Branddetektion genutzt werden kann. Diese Hitzeentwicklung beziehungsweise eine entsprechende Temperaturänderung wird hierbei dazu genutzt, eine Lichtintensität eines Lichts zu reduzieren, das sich im Lichtwellenleiter ausbreitet. Diese Reduktion der Lichtintensität wird mittels mehrerer temperaturempfindlicher Blendeelemente erreicht, die in dem Lichtwellenleiter angeordnet sind. Insbesondere kann der Lichtwellenleiter innerhalb der Umrichteranordnung derart angeordnet sein, dass er in der Nähe potenzieller Brandherde bzw. Brandstellen verläuft. An vorbestimmten Stellen im Lichtwellenleiter sind die Blendeelemente angeordnet, so dass ein sich im Lichtwellenleiter ausbreitendes Licht bzw. Lichtsignal die Blendeelemente passiert. Die Blendeelemente sind geeigneterweise in der Nähe der potenziellen Brandstellen angeordnet.

Entsteht an einem der Orte innerhalb der Umrichteranordnung ein Brand, so erhöht sich die Temperatur am Brandort. Diese Temperaturänderung bewirkt zweckmäßigerweise, dass die Lichtintensität des Lichtsignals, das dasjenige Blendeelement passiert, das in der Nähe oder am Brandort angeordnet ist, reduziert wird. Diese Reduktion kann als ein Hinweis auf den Brand gewertet werden. Dazu kann die Brandmeldeanlage beispielsweise eine geeignete Auswertevorrichtung umfassen.

Die Brandmeldeanlage kann derart konfiguriert bzw. kalibriert sein, dass beispielsweise eine Temperaturänderung um mehr als 50 K an einem der Blendeelemente einer Reduktion der Lichtintensität entspricht, die zu einer Auslösung eines Warnsignals führt.

Als Blendeelemente können bereits bekannte und im Handel erhältliche Bauteile verwendet werden. Diese sind beispielsweise aus der Fototechnik bekannt. Die Blendeelemente können auf einfache Weise in allgemein bekannte, gewöhnliche Lichtwellenleiter an den vorbestimmten Stellen eingesetzt werden. Aus diesen Gründen ist die vorgeschlagene Brandmeldeanlage der erfindungsgemäßen Umrichteranordnung vorteilhaft kostengünstig. Aufgrund des einfachen Wirkungsprinzips ist sie zudem besonders zuverlässig im Betrieb. Ein zusätzlicher Vorteil der erfindungsgemäßen Lösung ist die Sicherheit der Brandmeldeanlage gegen elektromagnetische Einkopplung.

Vorzugsweise umfasst wenigstens eines der Blendeelemente eine in den Lichtwellenleiter eingesetzte Blende. Die Blende kann ihre Blendenöffnung öffnen bzw. schließen. Eine Verkleinerung der Blendenöffnung reduziert die Lichtintensität eines die Blende passierenden Lichtsignals. Auf diese Weise ist ein besonders einfacher Aufbau des Blendeelements bereitgestellt. Eine Öffnungszeit bzw. Schließzeit der Blende kann beispielsweise zwischen 0,5 s und 2 s betragen.

Erfindungsgemäß umfasst das Blendeelement ein Bimetallelement. Das Bimetallelement weist die Eigenschaft auf, dass es temperaturempfindlich ist. Insbesondere kann das Bimetallelement in Abhängigkeit von der Temperatur dessen Form verändern. Das Bimetallelement ist zweckmäßigerweise mit der Blende verbunden, so dass eine Temperaturänderung eine Reduktion der Blendenöffnung bewirkt.

Gemäß einer Ausführungsform der Erfindung umfasst die Brandmeldeanlage eine Sendevorrichtung zum Einspeisen eines Lichtsignals in den Lichtwellenleiter. Die Sendevorrichtung kann beispielsweise ein Laserlichtsignal in den Lichtwellenleiter einspeisen. Es kann dabei auch als Leuchtdiode oder dergleichen realisiert sein. Insbesondere kann die Sendevorrichtung dazu eingerichtet sein, ein Lichtsignal, das aus einzelnen Lichtpulsen zusammengesetzt ist, in den Lichtwellenleiter einzuspeisen.

Bevorzugt ist das Lichtsignal ein Protokollsignal mit einer variierenden Lichtintensität. Das Protokollsignal kann beispielsweise eine vorbestimmten Abfolge einzelner Lichtpulse sein. Das Protokollsignal erlaubt eine verbesserte Detektion des Brandortes. Mittels einer geeigneten Kalibrierung der Brandmeldeanlage kann die im Protokollsignal enthaltene (beispielsweise binäre) Information dazu genutzt werden, Fehlauslösungen der Brandmeldeanlage zu vermeiden oder zu zumindest minimieren. Das Protokolsignal kann zum Beispiel eine mittels eines Barker Codes formatierte Information umfassen.

Gemäß einer weiteren Ausführungsform der Erfindung umfasst die Brandmeldeanlage eine Messvorrichtung zum Erfassen eines Ausgangslichtsignals an einem Ausgang des Lichtwellenleiters und/oder eine Auswertevorrichtung zum Auswerten des Ausgangslichtsignals umfasst. Der Ausgang des Lichtwellenleiters kann an jedem geeigneten Ort des Lichtwellenleiters, insbesondere an dem der Sendevorrichtung gegenüber liegenden Ende des Lichtwellenleiters angeordnet sein. An dem Ausgang befindet sich zweckmäßigerweise die Messvorrichtung, die ausgangsseitig mit der Auswertevorrichtung verbunden sein kann. Die Messvorrichtung kann beispielsweise eine Fotodiode und/oder geeignete Verstärker umfassen. Die Auswertevorrichtung umfasst geeigneterweise eine entsprechende Auswerteelektronik, die das erfasste Signal analysiert.

Geeigneterweise steht wenigstens eines der, vorzugsweise alle Blendeelemente in Wärmekontakt zu einem Gehäuse eines oder mehrerer der Schaltmodule. Beispielsweise kann der das Blendeelement enthaltender Abschnitt des Lichtwellenleiters mechanisch am Gehäuse befestigt oder zumindest daran anliegend angeordnet sein. Die Schaltmodule sind aufgrund der hohen Ströme, die durch die Schaltmodule fließen, als potenzielle Brandorte identifizierbar. Daher ist eine Anordnung der Blendeelemente im direkten Kontakt zu den Gehäusen der Schaltmodule dazu besonders geeignet, die Zuverlässigkeit der Brandmeldeanlage weiter zu erhöhen.

Gemäß einer bevorzugten Ausführungsform der Erfindung sind die Blendeelemente reflektierend ausgeführt. Vorzugsweise ist dabei die Sendevorrichtung zum Einspeisen des Lichtsignals in den Lichtwellenleiter dazu eingerichtet, ein von einem der Blendeelemente reflektiertes Licht zu erfassen und auszuwerten. Besonders bevorzugt ist die Sendervorrichtung ferner dazu eingerichtet, ein gepulstes Lichtsignal in den Lichtwellenleiter einzuspeisen, wobei eine Entfernungsmessung mittels einer Laufzeitmessung des gepulsten Lichtsignals durchführbar ist. Auf diese Weise kann vorteilhaft der Fehlerort, beispielsweise bei einem Brand, bestimmt werden. Sofern es zum Beispiel zu einer Temperaturerhöhung an einem der Schaltmodule kommt, schließt sich das entsprechende Blendeelement. Damit reflektiert dieses Blendeelement einen Teil des passierenden Lichts. Dies kann zu der Fehlerortbestimmung genutzt werden. Beispielsweise kann folgendermaßen vorgegangen werden: Wird am Ausgang eines der Lichtwellenleiter eine Reduktion der Lichtintensität festgestellt, so stellt die Sendevorrichtung auf einen Pulsbetrieb um. Dabei wird das gepulste Lichtsignal in den betreffenden Lichtwellenleiter eingespeist. Die Laufzeit der Lichtpulse des gepulsten Lichtsignals bis zur Reflexionsstelle am reflektierenden Blendeelement und damit der Fehlerort können somit ermittelt werden. Auf diese Weise wird es möglich, dass zur Überwachung der gesamten Umrichteranordnung nur ein Lichtwellenleiter verbaut werden muss.

Die Erfindung betrifft ferner ein Verfahren zur Brandüberwachung einer Umrichteranordnung mit einer Vielzahl elektrisch verbundener Schaltmodule, die jeweils Halbleiterschalter aufweisen, die in einem Gehäuse angeordnet sind.

Die Aufgabe der Erfindung besteht darin, ein solches Verfahren anzugeben, dass möglichst kostengünstig und zuverlässig ist.

Die Aufgabe wird erfindungsgemäß durch ein solches Verfahren gelöst, bei dem ein Lichtsignal in einen Lichtwellenleiter eingespeist wird, eine Lichtintensität des Lichtsignals beim Passieren eines Blendeelements, das in den Lichtwellenleiter eingesetzt und in einem Wärmekontakt mit einem der Gehäuse der Schaltmodule steht, in Abhängigkeit von einer Temperaturänderung an dem Blendeelement reduziert wird, ein Ausgangslichtsignal an einem Ausgang des Lichtwellenleiters erfasst wird, und falls das Ausgangslichtsignal eine vorbestimmte Auslösebedingung erfüllt, ein Warnsignal an einen Warnsignalempfänger gesendet wird.

Die Vorteile des erfindungsgemäßen Verfahrens entsprechen den Vorteilen, die bereits im Zusammenhang mit der erfindungsgemäßen Umrichteranordnung beschrieben wurden. Dabei können alle zuvor beschriebenen Merkmale der Umrichteranordnung allein oder in Kombination auch im Zusammenhang mit dem erfindungsgemäßen Verfahren realisiert werden.

Gemäß einer Ausführungsform des Verfahrens wird, falls die Auslösebedingung erfüllt ist, ein gepulstes Lichtsignal in den Lichtwellenleiter eingespeist und mittels einer Laufzeitmessung des gepulsten, an einem reflektierend ausgeführten Blendeelement reflektierten Lichtsignals eine Entfernungsmessung zur Bestimmung der Entfernung zu diesem Blendeelement durchgeführt.

Die Erfindung soll im Folgenden anhand der Figuren 1 bis 3 näher erläutert werden.
Figur 1 zeigt ein Ausführungsbeispiel einer erfindungsgemäßen Umrichteranordnung in einer schematischen Darstellung;
Figur 2 zeigt ein Beispiel einer Blende in einer schematischen Darstellung;
Figur 3 zeigt ein weiteres Ausführungsbeispiel der erfindungsgemäßen Umrichteranordnung in einer schematischen Darstellung.

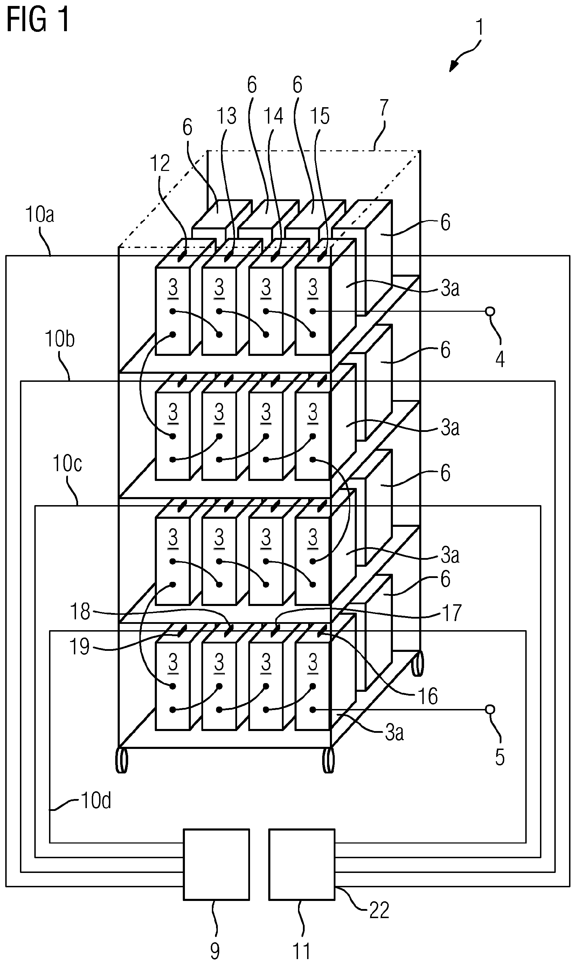

Im Einzelnen ist in Figur 1 eine Umrichteranordnung 1 dargestellt. Die Umrichteranordnung 1 umfasst Umrichterarme, die jeweils zwischen einem Gleichspannungsanschluss und einem Wechselspannungsanschluss angeordnet sind. In der Darstellung der Figur 1 ist aus Gründen der Übersichtlichkeit lediglich ein Umrichterarm 2 figürlich gezeigt, der eine Reihenschaltung zweipoliger Schaltmodule 3 umfasst. Der Umrichterarm 2 erstreckt sich zwischen einem Wechselspannungsanschluss 4 und einer Gleichspannungssammelschiene 5.

Jedes der Schaltmodule 3 umfasst ein Gehäuse 3a, in dem in einer Halbbrückenschaltung verbundene Halbleiterschalter angeordnet sind. Zudem ist jedem der Schaltmodule 3 ein Kondensator 6 zugeordnet, mit dem das Schaltmodul 3 elektrisch verbunden ist. Die Schaltmodule 3 sind von einer Tragestruktur 7 getragen, die auch als Turm bezeichnet wird. Die Anzahl der Schaltmodule 3 im Umrichterarm 2 kann bis zu mehreren Hundert betragen.

Die Umrichteranordnung 1 umfasst ferner eine Brandmeldeanlage 8. Die Brandmeldeanlage weist eine Sendevorrichtung 9, vier Lichtwellenleiter 10a-10d sowie eine Mess- und Auswertevorrichtung 11.

Der erste Lichtwellenleiter 10a weist an vorbestimmten Stellen in den Lichtwellenleiter 10a eingebaute Blendeelemente 12-15. Der vierte Lichtwellenleiter 10d weist ebenfalls Blendeelemente 16-19, die an dazu vorgesehenen Stellen in den Lichtwellenleiter 10d eingesetzt sind. Auch die übrigen Lichtwellenleiter 10b und 10c weisen Blendeelemente auf, die jedoch in Figur 1 aus Übersichtlichkeitsgründen nicht mit entsprechenden Bezugszeichen versehen sind. Alle Blendeelemente der Umrichteranordnung 1 sind gleichartig aufgebaut, was jedoch im Allgemeinen nicht der Fall sein muss.

Die Blendeelemente 12-19 umfassen eine Blende sowie ein Bimetallelement, die derart miteinander verbunden sind, dass bei einer vorbestimmten Temperaturänderung das Bimetallelement mit der Blende derart zusammenwirkt, dass eine Blendeöffnung der Blende verkleinert wird. Die Blendeelemente 12-19 stehen im Wärmekontakt mit den Gehäusen 3a der Schaltmodule 3. Auf diese Weise kann insbesondere ein Brand, der im oder am Schaltmodul 3 entstanden ist, besonders zuverlässig erkannt werden.

Das Verfahren zur Brandüberwachung soll im Folgenden im Zusammenhang mit dem ersten Lichtwellenleiter 10a erläutert werden. Das Verfahren wird unter Verwendung der übrigen Lichtwellenleiter 10b-d entsprechend durchgeführt.

Mittels der Sendevorrichtung 9 wird in den Lichtwellenleiter 10a ein Lichtsignal eingespeist, wobei das Lichtsignal eine vorbestimmte Signallänge und einen vorbestimmten zeitlichen Signalverlauf aufweist. Das Lichtsignal durchläuft den Lichtwellenleiter 10a und passiert dabei die Blendeelemente 12-15. Dabei wird in Abhängigkeit von einer Temperatur an den Blendeelementen in der zuvor beschriebenen Weise eine Lichtintensität des Lichtsignals verändert. Ist das Lichtsignal ein Protokollsignal so wird dabei dessen zeitlicher Verlauf verändert. An einem Ausgang 22 des ersten Lichtwellenleiters 10a ist die Mess- und Auswertevorrichtung 11 angeordnet, mittels der ein Ausgangssignal erfasst wird. Das Ausgangssignal entspricht dem veränderten Lichtsignal am Ausgang 22. In der Auswertevorrichtung 11 wird eine Analyse des Ausgangssignals vorgenommen. Entspricht das Ausgangssignal einer vorbestimmten, in der Auswertevorrichtung 11 gespeicherten Bedingung, so wird anschließend ein Meldesignal an eine übergeordnete zentrale Überwachungseinheit gesendet.

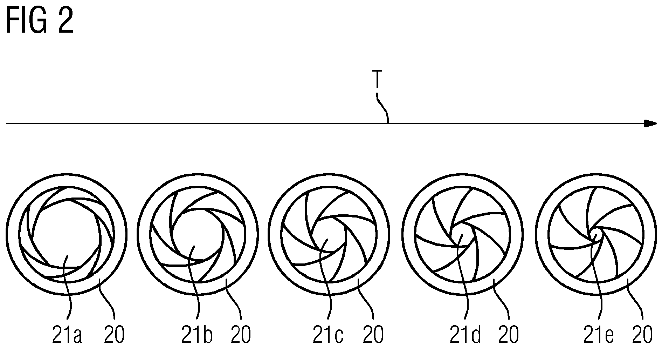

Figur 2 zeigt unterschiedliche Zustände einer Blende 20 eines der Blendeelemente 12-19 in Abhängigkeit von der Temperatur. Ein Temperaturanstieg ist mittels eines Pfeils T angedeutet. Es ist in Figur 2 erkennbar, dass bei niedrigeren Temperaturen eine Blendeöffnung 21a der Blende 20 größer als die Blendeöffnung 21e der Blende 20 bei höheren Temperaturen. Die Zwischenzustände der Blende 20 bezüglich der Blendeöffnungen sind entsprechend mit den Bezugszeichen 21b-d kenntlich gemacht. Es ist erkennbar, dass aufgrund der verringerten Blendeöffnung 21e die Lichtintensität eines die Blende 20 bzw. die Blendeöffnung 21e passierenden Lichtsignals verringert wird.

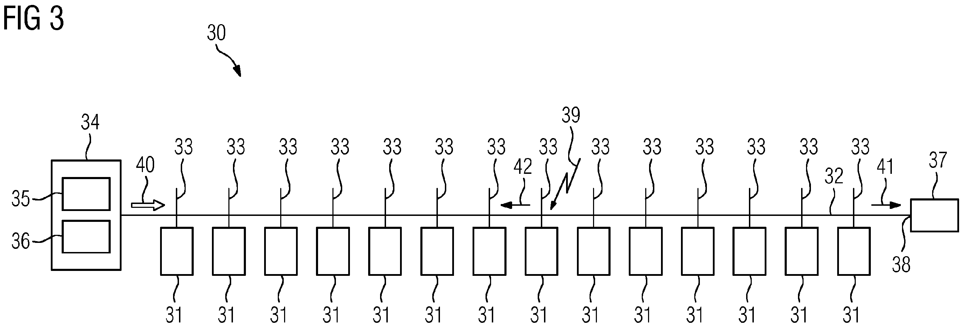

Figur 3 zeigt eine Umrichteranordnung 30 mit einer Mehrzahl von Schaltmodulen 31. Die Umrichteranordnung umfasst eine Brandmeldeanlage mit einem Lichtwellenleiter 32 und Blendeelementen 33. Eine Sendevorrichtung 34 umfasst einen Emitter 35 und einen Receiver 36. Mittels des Emitters 35 kann ein Lichtsignal in den Lichtwellenleiter 32 eingespeist werden. Die Intensität des Lichtsignals kann mittels eines Empfängers 37 an einem Ausgang 38 des Lichtwellenleiters 32 gemessen werden. Ein Blitz-Zeichen 39 bezeichnet in Figur 3 den Ort eines Brandes in der Umrichteranordnung 30. In einem solchen Fall schließt sich die nächstliegende Blende 33 zumindest teilweise, so dass die Intensität des eingespeisten Lichtsignals größer als die am Ausgang 38 gemessene Intensität ist, was in Figur 3 durch die Pfeile 40 bzw. 41 schematisch angedeutet ist. Die Blendeelemente 33 sind derart ausgestaltet, dass ein Teil des Lichts des Lichtsignals an der betreffenden Blende 33 reflektiert wird, was mittels eines Pfeils 42 angedeutet ist.

Wird mittels des Empfängers 37 eine Intensitätsreduktion festgestellt, so wird ein entsprechendes Signal an die Sendevorrichtung 34 geleitet. Daraufhin speist die Sendevorrichtung 34 ein gepulstes Lichtsignal in den Lichtwellenleiter 32 ein. Die an dem Blendeelement 33 zumindest teilweise reflektierten gepulsten Lichtsignale werden mittels des Receivers 36 erfasst, wobei deren Laufzeit gemessen wird. Auf diese Weise kann die Entfernung zwischen der Sendevorrichtung 32 und dem Brand ermittelt werden.

## Patentansprüche

1. Umrichteranordnung (1) mit einer Vielzahl elektrisch verbundener Schaltmodule (3), die jeweils Halbleiterschalter aufweisen, sowie mit einer Brandmeldeanlage (8) zur Brandüberwachung der Umrichteranordnung (1),
**dadurch gekennzeichnet, dass**
die Brandmeldeanlage (8) wenigstens einen Lichtwellenleiter (10a) umfasst, der an mehreren vorbestimmten, voneinander beabstandeten Stellen jeweils ein Blendeelement (12-15) aufweist, wobei jedes Blendeelement (12-15) bei einem Temperaturanstieg am Blendeelement (12-15) eine Lichtintensität eines das Blendeelement (12-15) passierendes Lichtsignals reduziert, wobei das Blendeelement (12-15) ein Bimetallelement umfasst, und das Bimetallelement mit der Blende des Blendeelements verbunden ist, so dass eine Temperaturerhöhung an einem der Schaltmodule, eine Reduktion der Blendenöffnung des entsprechenden Blendeelements bewirkt.

2. Umrichteranordnung (1) nach Anspruch 1, wobei das Blendeelement (12-15) eine in den Lichtwellenleiter (10a) eingesetzte Blende (20) umfasst.

3. Umrichteranordnung (1) nach einem der vorangehenden Ansprüche, wobei die Brandmeldeanlage (8) eine Sendevorrichtung (9) zum Einspeisen eines Lichtsignals in den Lichtwellenleiter (10a) umfasst.

4. Umrichteranordnung (1) nach einem der vorangehenden Ansprüche, wobei das Lichtsignal ein Protokollsignal mit einer variierenden Lichtintensität ist.

5. Umrichteranordnung (1) nach einem der vorangehenden Ansprüche, wobei die Brandmeldeanlage (8) eine Messvorrichtung (11) zum Erfassen eines Ausgangslichtsignals an einem Ausgang (22) des Lichtwellenleiters und/oder eine Auswertevorrichtung (11) zum Auswerten des Ausgangslichtsignals umfasst.

6. Umrichteranordnung (1) nach einem der vorangehenden Ansprüche, wobei das Blendeelement (12-15) in Wärmekontakt zu einem Gehäuse (3a) eines der Schaltmodule (3) steht.

7. Umrichteranordnung nach einem der vorangehenden Ansprüche, wobei die Blendeelemente (12-15) reflektierend ausgeführt sind.

8. Umrichteranordnung nach Anspruch 6, wobei eine Sendevorrichtung (9) zum Einspeisen eines Lichtsignals in den Lichtwellenleiter (10a) vorgesehen ist, die dazu eingerichtet ist, ein von einem der Blendeelemente (12-15) reflektiertes Licht zu erfassen und auszuwerten.

9. Umrichteranordnung nach Anspruch 7, wobei die Sendevorrichtung (9) dazu eingerichtet ist, ein gepulstes Lichtsignal in den Lichtwellenleiter (10a) einzuspeisen, und dazu eingerichtet ist, eine Entfernungsmessung mittels Laufzeitmessung des gepulsten Lichtsignals durchzuführen.

10. Verfahren zur Brandüberwachung einer Umrichteranordnung (1) mit einer Vielzahl elektrisch verbundener Schaltmodule (3), die jeweils Halbleiterschalter aufweisen, die in einem Gehäuse (3a) angeordnet sind, bei dem
- ein Lichtsignal in einen Lichtwellenleiter (10a-d) eingespeist wird,
- eine Lichtintensität des Lichtsignals beim Passieren eines Blendeelements (12-19), das in den Lichtwellenleiter (10a-d) eingesetzt und in einem Wärmekontakt mit einem der Gehäuse der Schaltmodule (3) steht, in Abhängigkeit von einer Temperaturänderung an dem Blendeelement (12-19) reduziert wird,
- ein Ausgangslichtsignal an einem Ausgang (22) des Lichtwellenleiters (10a-d) erfasst wird, und
- falls das Ausgangslichtsignal eine vorbestimmte Auslösebedingung erfüllt, ein Warnsignal an einen Warnsignalempfänger gesendet wird, wobei als das Blendeelement (12-15) ein Blendeelement verwendet wird, das ein Bimetallelement umfasst,und wobei das Bimetallelement mit der Blende des Blendeelements verbunden ist, so dass eine Temperaturerhöhung an einem der Schaltmodule, eine Reduktion der Blendenöffnung des entsprechenden Blendeelements bewirkt.

11. Verfahren nach Anspruch 10, wobei die Blendeelemente (12-15) reflektierend ausgeführt sind, wobei, falls die Auslösebedingung erfüllt ist, ein gepulstes Lichtsignal in den Lichtwellenleiter (10a-d) eingespeist wird und mittels einer Laufzeitmessung des gepulsten, an einem der Blendeelemente (12-19) reflektierten Lichtsignals eine Entfernungsmessung zur Ermittlung der Entfernung zu diesem Blendeelement (12-19) durchgeführt wird.

## Claims

1. Converter arrangement (1) comprising a multiplicity of electrically connected switching modules (3) each having semiconductor switches, and comprising a fire alarm system (8) for monitoring the converter arrangement (1) for fire, **characterized in that**
the fire alarm system (8) comprises at least one optical waveguide (10a) having an aperture element (12-15) in each case at a plurality of predetermined locations spaced apart from one another, wherein each aperture element (12-15), in the event of a temperature rise at the aperture element (12-15), reduces a light intensity of a light signal passing through the aperture element (12-15), wherein the aperture element (12-15) comprises a bimetallic element, and the bimetallic element is connected to the aperture of the aperture element, such that a temperature increase at one of the switching modules effects a reduction of the aperture opening of the corresponding aperture element.

2. Converter arrangement (1) according to Claim 1, wherein the aperture element (12-15) comprises an aperture (20) inserted into the optical waveguide (10a).

3. Converter arrangement (1) according to either of the preceding claims, wherein the fire alarm system (8) comprises a transmitting device (9) for feeding a light signal into the optical waveguide (10a).

4. Converter arrangement (1) according to any of the preceding claims, wherein the light signal is a log signal having a varying light intensity.

5. Converter arrangement (1) according to any of the preceding claims, wherein the fire alarm system (8) comprises a measuring device (11) for detecting an output light signal at an output (22) of the optical waveguide and/or an evaluation device (11) for evaluating the output light signal.

6. Converter arrangement (1) according to any of the preceding claims, wherein the aperture element (12-15) is in thermal contact with a housing (3a) of one of the switching modules (3).

7. Converter arrangement (1) according to any of the preceding claims, wherein the aperture elements (12-15) are embodied in reflective fashion.

8. Converter arrangement (1) according to Claim 6, wherein a transmitting device for feeding a light signal into the optical waveguide (10a) is provided, said transmitting device being configured to detect and evaluate light reflected by one of the aperture elements (12-15).

9. Converter arrangement (1) according to Claim 7, wherein the transmitting device (9) is configured to feed a pulsed light signal into the optical waveguide (10a), and is configured to carry out a distance measurement by means of time-of-flight measurement of the pulsed light signal.

10. Method for fire monitoring of a converter arrangement (1) comprising a multiplicity of electrically connected switching modules (3) each having semiconductor switches, which are arranged in a housing (3a), wherein
- a light signal is fed into an optical waveguide (10a-d),
- a light intensity of the light signal upon passing through an aperture element (12-19), which is inserted into the optical waveguide (10a-d) and is in thermal contact with one of the housings of the switching modules (3), is reduced depending on a temperature change at the aperture element (12-19),
- an output light signal is detected at an output (22) of the optical waveguide (10a-d), and
- if the output light signal satisfies a predetermined trigger condition, a warning signal is transmitted to a warning signal receiver, wherein the aperture element (12-15) used is an aperture element comprising a bimetallic element, and wherein the bimetallic element is connected to the aperture of the aperture element, such that a temperature increase at one of the switching modules effects a reduction of the aperture opening of the corresponding aperture element.

11. Method according to Claim 10, wherein the aperture elements (12-15) are embodied in reflective fashion, wherein, if the trigger condition is satisfied, a pulsed light signal is fed into the optical waveguide (10a-d) and, by means of a time-of-flight measurement of the pulsed light signal reflected at one of the aperture elements (12-19), a distance measurement is carried out in order to determine the distance to this aperture element (12-19) .

## Revendications

1. Onduleur (1) ayant une pluralité de modules (3) de coupure reliés électriquement, qui ont chacun des interrupteurs à semi-conducteur, ainsi qu'un système (8) d'alerte à l'incendie pour la surveillance de l'onduleur (1),
**caractérisé en ce que**
le système (8) d'alerte à l'incendie comprend au moins une fibre (10a) optique, qui a, en plusieurs endroits déterminés à l'avance et à distance les uns des autres, respectivement, un élément (12 à 15) de diaphragme, chaque élément (12 à 15) de diaphragme réduisant, lors d'une élévation de la température de l'élément (12 à 15) de diaphragme, une intensité lumineuse d'un signal lumineux passant dans l'élément (12 à 15) de diaphragme, l'élément (12 à 15) de diaphragme comprenant un bilame et le bilame étant relié au diaphragme de l'élément de diaphragme de manière à ce qu'une élévation de la température de l'un des modules de coupure provoque une réduction de l'ouverture de diaphragme de l'élément de diaphragme correspondant.

2. Onduleur (1) suivant la revendication 1, dans lequel l'élément (12 à 15) de diaphragme comprend un diaphragme (20) inséré dans la fibre (10a) optique.

3. Onduleur (1) suivant l'une des revendications précédentes, dans lequel le système (8) d'alerte à l'incendie comprend un dispositif (9) d'émission pour injecter un signal lumineux dans la fibre (10a) optique.

4. Onduleur (1) suivant l'une des revendications précédentes, dans lequel le signal lumineux est un signal de protocole ayant une intensité de la lumière variable.

5. Onduleur (1) suivant l'une des revendications précédentes, dans lequel le système (8) d'alerte à l'incendie comprend un dispositif (11) de mesure pour la détection d'un signal lumineux de sortie à une sortie (22) de la fibre optique et/ou un dispositif (11) d'exploitation pour exploiter le signal lumineux de sortie.

6. Onduleur (1) suivant l'une des revendications précédentes, dans lequel l'élément (12 à 15) de diaphragme est en contact thermique avec un boîtier (3a) de l'un des modules (3) de coupure.

7. Onduleur (1) suivant l'une des revendications précédentes, dans lequel les éléments (12 à 15) de diaphragme sont réalisés réfléchissants.

8. Onduleur (1) suivant la revendication 6, dans lequel un dispositif (9) d'émission est prévu pour injecter un signal lumineux dans la fibre (10a) optique, en étant conçu pour détecter et exploiter de la lumière réfléchie par l'un des éléments (12 à 15) de diaphragme.

9. Onduleur (1) suivant la revendication 7, dans lequel le dispositif (9) d'émission est conçu pour injecter un signal lumineux pulsé dans la fibre (10a) optique, et est conçu pour effectuer une mesure de distance, au moyen de la mesure du temps de parcours du signal lumineux pulsé.

10. Procédé de surveillance vis-à-vis de l'incendie d'un onduleur (1) ayant une pluralité de modules (3) de coupure reliés électriquement et ayant chacun des interrupteurs à semi-conducteur, qui sont disposés dans un boîtier (3a), dans lequel
- on injecte un signal lumineux dans une fibre (10a-d) optique,
- on réduit une intensité lumineuse du signal lumineux au passage dans un élément (12 à 19) de diaphragme, qui est inséré dans la fibre (10a-d) optique et est en contact thermique avec l'un des boîtiers des modules (3) de coupure, en fonction d'une variation de température de l'élément (12 à 19) de diaphragme,
- on détecte un signal lumineux de sortie à une sortie (22) de la fibre (10a-d) optique, et
- si le signal lumineux de sortie satisfait une condition de déclenchement déterminée à l'avance, on envoie un signal d'alerte à un récepteur de signal d'alerte, dans lequel on utilise, comme élément (12 à 15) de diaphragme, un élément de diaphragme, qui comprend un bilame et dans lequel le bilame est relié au diaphragme de l'élément de diaphragme, de manière à ce qu'une élévation de la température de l'un des modules de coupure provoque une réduction de l'ouverture de diaphragme de l'élément de diaphragme correspondant.

11. Procédé suivant la revendication 10, dans lequel les éléments (12 à 15) de diaphragme sont réalisés réfléchissant, dans lequel, si la condition de déclenchement est satisfaite, on injecte un signal lumineux pulsé dans la fibre (10a-d) optique et, au moyen d'une mesure du temps de parcours du signal lumineux pulsé, réfléchi sur l'un des éléments (12 à 19) de diaphragme, on effectue une mesure de distance pour déterminer la distance à cet élément (12 à 19) de diaphragme.
